# EUROPEAN PATENT APPLICATION

(11) **EP 4 678 308 A1**
(43) Date of publication of application: **14.01.2026**
(21) Application number: 24766787.6
(22) Date of filing: 13.02.2024
(51) Int. Cl.: B22D 17/20, B22D 17/26, B29C 45/03, B29C 45/17, B29C 45/76

(54) **INJECTION MOLDING MACHINE CONNECTING MEMBER, AND INJECTION MOLDING MACHINE ADJUSTMENT METHOD AND MODIFICATION METHOD**

(30) Priority: 07.03.2023 JP 2023034752
(71) Applicant: The Japan Steel Works, Ltd., Tokyo 141-0032 (JP)
(72) Inventor: YAMAGUCHI Takeshi, Tokyo 141-0032 (JP); NAKAGAWA Yutaka, Tokyo 141-0032 (JP); YONEHARA Yusuke, Tokyo 141-0032 (JP); TOYOSHIMA Toshio, Tokyo 141-0032 (JP)
(74) Representative: Simmons & Simmons LLP (Munich)
(86) International application number: PCT/JP2024/004825
(87) International publication number: WO 2024/185415

(57) **Abstract**

This injection molding machine comprises: a fixed platen for fixing a fixed mold; an injection cylinder provided with an injection nozzle; a raising and lowering device for moving the injection cylinder in the Z-direction such that the injection nozzle can adopt a plurality of height positions; a movement cylinder 36 for moving the injection cylinder such that the injection nozzle can be moved toward and away from the fixed mold; and a connecting member 4 which is fixed to the fixed platen and is connected to the movement cylinder 36. The connecting member 4 can be connected to the movement cylinder 36 at a plurality of connection positions such that the movement cylinder 36 faces in a horizontal direction at each of the plurality of height positions.

## Description

### Technical Field

This application claims the benefit of Japanese Priority Patent Application No. JP2023-34752 filed on March 7, 2023, the entire contents of which are incorporated herein by reference.

This invention relates to an injection molding machine and a connection member, and to methods of adjusting and modifying the injection molding machine.

### Background Art

In a mold used for injection molding, the injection position of an injection material may differ depending on factors such as the injection material, the shape of the molded product, and the number of molded products. Japanese Patent Application Laid-Open No. 2001-191167 discloses an injection molding machine comprising a lifting and lowering mechanism of an injection cylinder and a positioning plate that is mounted on a fixed platen and that determines the mounting position of a sprue bushing of the mold. The injection molding machine includes a movement cylinder that moves the injection cylinder back and forth with respect to the mold.

### Summary of Invention

As described in Japanese Patent Application Laid-Open No. 2001-191167, when the injection cylinder is lifted and lowered, the movement cylinder is also lifted and lowered together with the injection cylinder. At this time, the orientation of the movement cylinder is preferably kept parallel to the injection cylinder. However, since the movement cylinder is directly fixed to the fixed platen by a connection fitting at the end of the movement cylinder, a plurality of mounting portions must be provided on the fixed platen according to the number of height positions that the movement cylinder can assume. As a result, the configuration of the fixed platen may become more complicated.

The purpose of the present disclosure is to provide an injection molding machine in which the height at which the movement cylinder is mounted to the fixed platen can be adjusted without complicating the configuration of the fixed platen.

The injection molding machine of the present disclosure comprises a connection member that is secured to a fixed platen and that is connected to a movement cylinder. The connection member can be connected to the movement cylinder at a plurality of connection positions such that the movement cylinder is oriented in the horizontal direction at each of a plurality of height positions.

According to the present disclosure, an injection molding machine can be provided in which the height at which the movement cylinder is mounted to the fixed platen can be adjusted without complicating the configuration of the fixed platen.

The objects, features, and advantages of the present application, above and otherwise, will become apparent from the detailed description set forth below with reference to the accompanying drawings, that illustrate the present application.

### Brief Description of the Drawings

[Fig. 1A] Fig. 1A is a front view of the injection molding machine according to a first embodiment of the present invention.
[Fig. 1B] Fig. 1B is a front view of the injection molding machine according to the first embodiment of the present invention.
[Fig. 2] Fig. 2 is a partial plan view of the injection molding machine shown in Figs. 1A and 1B.
[Fig. 3A] Fig. 3A is a plan view of a positioning plate.
[Fig. 3B] Fig. 3B is a plan view of the positioning plate.
[Fig. 4] Fig. 4 is a plan view of a connection part between a movement cylinder and a fixed platen.
[Fig. 5A] Fig. 5A is a side cross-sectional view of the connection part between the movement cylinder and the fixed platen in the first embodiment.
[Fig. 5B] Fig. 5B is a side cross-sectional view of the connection part between the movement cylinder and the fixed platen in the first embodiment.
[Fig. 6A] Fig. 6A is a front view of the connection member and a connection fitting in the first embodiment.
[Fig. 6B] Fig. 6B is a front view of the connection member and the connection fitting in the first embodiment.
[Fig. 7] Fig. 7 is a plan view of the connection member and the connection fitting in a modification.
[Fig. 8] Fig. 8 is a front view of the connection member and the connection fitting in a second embodiment.
[Fig. 9] Fig. 9 is a plan view of the connection part between the movement cylinder and the fixed platen in the second embodiment.
[Fig. 10A] Fig. 10A is a side cross-sectional view of the connection part between the movement cylinder and the fixed platen in the second embodiment.
[Fig. 10B] Fig. 10B is a side cross-sectional view of the connection part between the movement cylinder and the fixed platen in the second embodiment.
[Fig. 11] Fig. 11 is a front view of the connection member between the movement cylinder and the connection fitting in a third embodiment.
[Fig. 12] Fig. 12 is a side cross-sectional view of the connection part between the movement cylinder and the fixed platen in the third embodiment.
[Fig. 13] Fig. 13 is a front view of the connection member and the connection fitting in a fourth embodiment.
[Fig. 14] Fig. 14 a side cross-sectional view of the connection part between the movement cylinder and the fixed platen in the fourth embodiment.
[Fig. 15A] Fig. 15A is a side cross-sectional view of the connection part between the movement cylinder and the fixed platen in a comparative example.
[Fig. 15B] Fig. 15B is a side cross-sectional view of the connection part between the movement cylinder and the fixed platen in the comparative example.
[Fig. 16A] Fig. 16A is a front view of the fixed platen and the connection fitting in the comparative example.
[Fig. 16B] Fig. 16B is a front view of the fixed platen and the connection fitting in the comparative example.

### Detailed Description of Embodiments

### First Embodiment

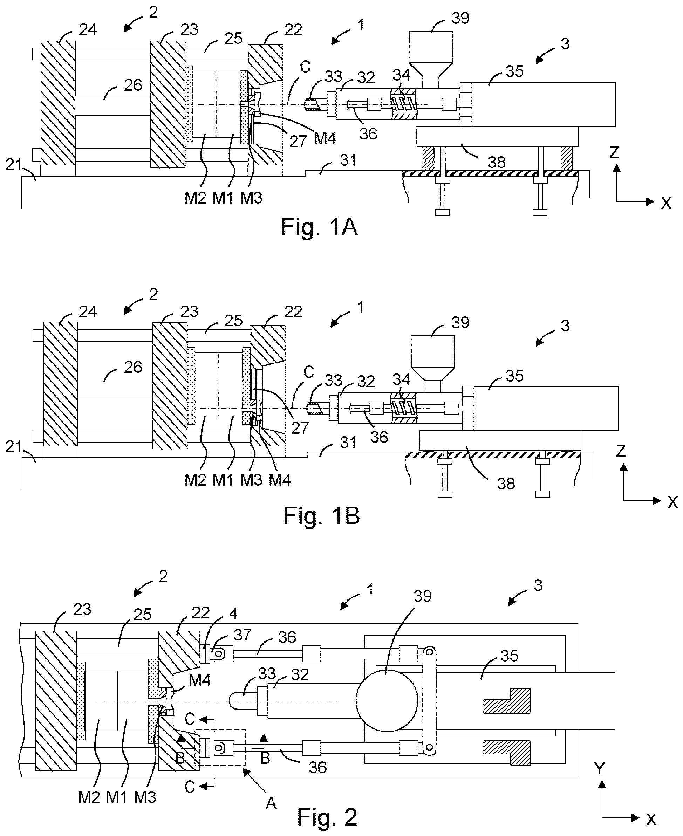

Injection molding machine 1 of the first embodiment of the present invention will next be described with reference to Figs. 1A to 7. In the following description, the direction of movement of injection cylinder 32 and screw 34 is referred to as the X-direction. The X-direction is parallel to the horizontal direction. The direction parallel to the horizontal direction and orthogonal to the X-direction is referred to as the Y-direction. The direction orthogonal to the X- and Y-directions, i.e., the vertical direction, is referred to as the Z-direction.

### Overall Configuration

Figs. 1A and 1B show schematic front views of injection molding machine 1 of the first embodiment. Fig. 1A shows injection cylinder 32 and injection nozzle 33 at a relatively high position in the Z-direction (hereinafter referred to as "high position"), and Fig. 1B shows injection cylinder 32 and injection nozzle 33 at a relatively low position in the Z-direction (hereinafter referred to as "low position"). Fig. 2 shows a partial plan view of injection molding machine 1.

Injection molding machine 1 is a horizontal metal injection molding machine that injects molten metals such as magnesium alloys and aluminum alloys. Injection molding machine 1 roughly comprises mold-clamping unit 2 that clamps the mold, and injection unit 3 that heats, melts, and injects the metal material to be injected. The present invention is not limited to a metal injection molding machine but can also be applied to a resin injection molding machine.

### Mold-Clamping Unit 2

Mold-clamping unit 2 comprises fixed platen 22 that is fixed on bed 21 and on which fixed mold M1 is mounted, mold-clamping housing 24 that can slide on bed 21, and movable platen 23 that can slide on bed 21 and on which movable mold M2 is mounted. Fixed platen 22 and mold-clamping housing 24 are connected by a plurality of tie bars 25. Hydraulic clamping cylinder 26 is provided between movable platen 23 and mold-clamping housing 24 for opening and closing the mold. Instead of a hydraulic mold clamping cylinder, a link mechanism (not shown) that is driven by an electric ball screw may also be provided. Positioning ring M4 is provided on the surface of fixed mold M1 that faces injection nozzle 33 for positioning injection nozzle 33.

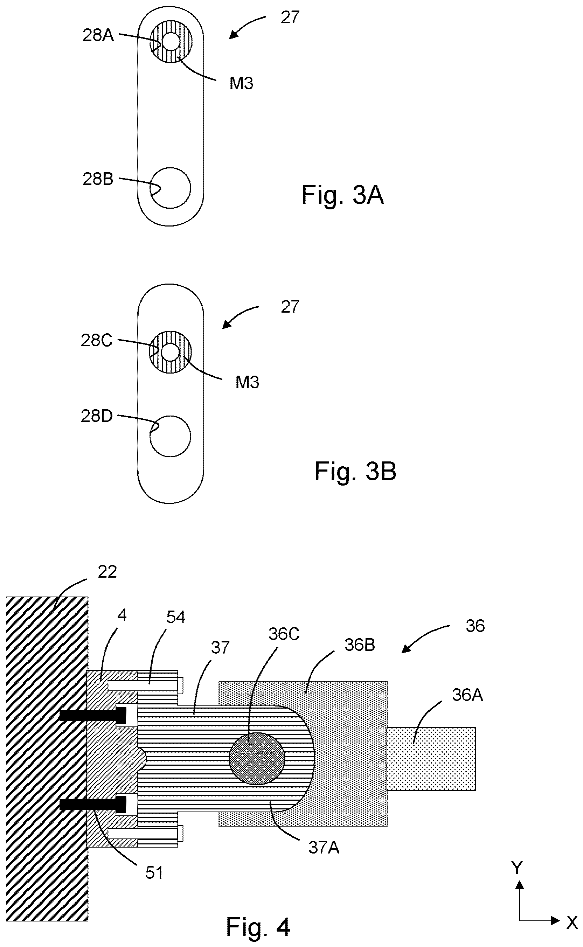

Figs. 3A and 3B show plan views of positioning plates 27. Mold-clamping unit 2 is provided with a plurality of positioning plates 27 that perform positioning sprue bushing M3 according to the height of sprue bushing M3 of fixed mold M1. A plurality of positioning plates 27 is preferably provided, one of which is selectively and removably fixed to fixed platen 22.

Positioning plate 27 shown in Fig. 3A includes upper and lower openings 28A and 28B, respectively, and the end of sprue bushing M3 is inserted into upper opening 28A. Positioning plate 27 shown in Fig. 3B includes upper and lower openings 28C and 28D, respectively, these openings each being located closer to the center, and the end of sprue bushing M3 is inserted into upper opening 28C. Although not shown in the figure, depending on the height of sprue bushing M3, the end of sprue bushing M3 can be fitted into opening 28B shown in Fig. 3A or opening 28D shown in Fig. 3B. By providing additional positioning plates 27 with different opening positions, various sprue bushings M3 can be performed positioning at different heights. Instead of using positioning plate 27, a plurality of holes for positioning ring M4 can be provided in fixed platen 22 to change injection positions.

### Injection Unit 3

Injection unit 3 is provided on base 31. Injection unit 3 comprises injection cylinder 32, screw 34 that is housed in injection cylinder 32, drive mechanism 35 that drives screw 34, hydraulic movement cylinders 36 that move injection cylinder 32, and lifting/lowering device 38 for injection cylinder 32. Screw 34 is both rotated and driven in the X-direction by drive mechanism 35. Hopper 39 is provided near the rear end of injection cylinder 32 to supply material to be injected. At the end of injection cylinder 32, injection nozzle 33 is provided that supplies the injection material into a cavity (not shown) formed by fixed mold M1 and movable mold M2.

Movement cylinders 36 are driven by a hydraulic pump (not shown) to move injection cylinder 32 in the X-direction so that injection nozzle 33 can move toward and away from fixed mold M1. For example, movement cylinders 36 move injection cylinder 32 forward so that injection nozzle 33 contacts sprue bushing M3 of fixed mold M1. Movement cylinder 36 is connected to drive mechanism 35 and fixed platen 22. As shown in Fig. 2, one movement cylinder 36 is provided on each side of injection cylinder 32 in the Y-direction.

Lifting/lowering device 38 moves injection cylinder 32 in the Z-direction. As a result, injection nozzle 33 can assume a plurality of height positions by the operation of lifting/lowering device 38. In the present embodiment, injection nozzle 33 can assume two height positions, i.e., the high and low positions described above. Lifting/lowering device 38 also moves movement cylinders 36 in the Z-direction. Movement cylinders 36 are moved in the Z-direction by lifting/lowering device 38 while maintaining a constant distance in the Z-direction from injection cylinder 32. As a result, movement cylinders 36 can assume the plurality of height positions according to the height of injection nozzle 33.

### Configuration of Connection Part between Movement Cylinders 36 and Fixed Platen 22

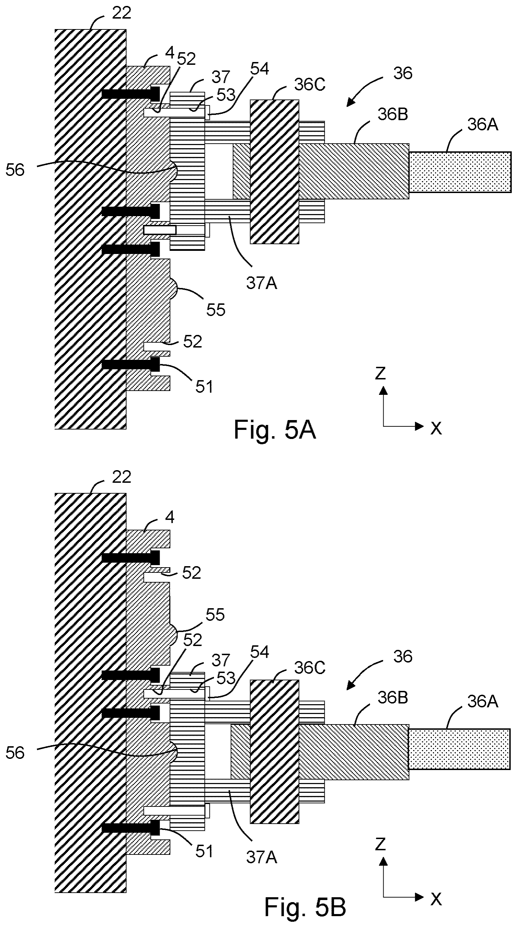

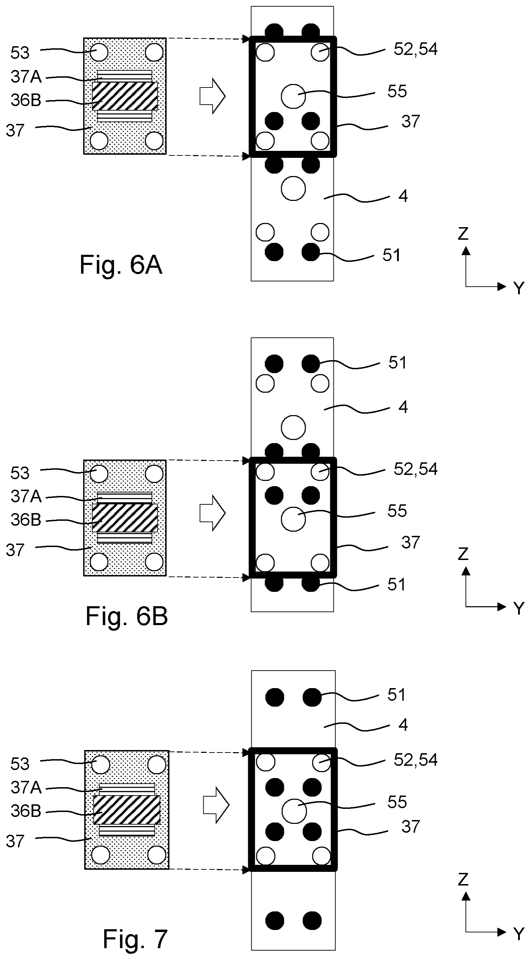

Fig. 4 shows a plan view of the connection part between movement cylinder 36 and fixed platen 22 (enlarged view of area A in Fig. 2), and Figs. 5A and 5B show a side cross-sectional view of the connection part (sectional view taken along line B-B in Fig. 2). Figs. 6A and 6B show a front view of the connection member and connection fitting (front view from line C-C in Fig. 2). Figs. 5A and 6A show a case in which injection cylinder 32 is in the high position, and Figs. 5B and 6B show a case in which injection cylinder 32 is in the low position, corresponding to Figs 1A and 1B, respectively.

As shown in Fig. 4, movement cylinder 36 comprises cylindrical cylinder body 36A that is connected to drive mechanism 35 (see Figs. 1A and 1B) and, as an example, rectangular end member 36B that is fixed to the end of cylinder body 36A by screws or other means. Movement cylinder 36 comprises connection fitting 37 at the end of fixed platen 22 side that is connected to connection member 4 to be next described. Connection fitting 37 includes forked part 37A that sandwiches end member 36B. End member 36B is rotatably supported to connection fitting 37 by pin 36C that is passed through-holes in forked part 37A and a hole in end member 36B. Pin 36C permits a slight tilt of cylinder body 36A and end member 36B from the X-direction.

Connection member 4 is mounted on the surface of fixed platen 22 that faces movement cylinder 36. As shown in Figs. 6A and 6B, connection member 4 is a rectangular plate when viewed from the X-direction. In Figs. 6A and 6B, the black circles indicate fixed positions at which connection member 4 is secured to fixed platen 22. Through-holes are provided through connection member 4 at the positions indicated by the black circles, and holes are provided at the corresponding positions on fixed platen 22 (see Fig. 4). Connection member 4 is mounted on fixed platen 22 by inserting bolts 51 through these through-holes and holes. In Figs. 4, 5A, and 5B, bolts 51 are shown in black. Eight bolts 51 are provided but the number of bolts 51 is not limited.

As shown in Figs. 5A to 6B, a plurality of holes 52 are provided on the surface of connection member 4 that confronts connection fitting 37. Internal threads are formed on the inner surfaces of holes 52. Holes 52 terminate in the middle of the thickness direction (X-direction) of connection member 4 but also may pass through connecting member 4 in the thickness direction. In Figs 6A and 6B, holes 52 are indicated by small white circles. Six holes 52 are provided but the number of holes 52 is not limited.

As shown by the figures to the left in Figs. 6A and 6B, connection fitting 37 is a rectangular plate when viewed from the X-direction. In one example, connection fitting 37 has approximately the same width (Y-direction dimension) as connection member 4 and is shorter in length (X-direction dimension) than connection member 4. Connection fitting 37 includes a plurality of through-holes 53.

As shown in Figs. 5A and 6B, when injection cylinder 32 is in the high position, connection fitting 37 is secured (connected) to the upper area of connection member 4 in the Z-direction. Specifically, the four upper holes 52 (small white circles) of connection member 4 and the four through-holes 53 (white circles) of connection fitting 37 are aligned, and connection fitting 37 is secured to connection member 4 with fasteners 54 such as bolts. The positions of the four holes 52 (small white circles) in the upper part of connection member 4 are pre-set such that movement cylinder 36 (cylinder body 36A and end member 36B) are oriented in the horizontal direction. The arrows in the figures indicate the movement of connection fitting 37 onto connection member 4. The bold frame indicates connection fitting 37 that is secured to connection member 4.

The same is true when injection cylinder 32 is in the low position. As shown in Figs. 5B and 6B, connection fitting 37 is secured (connected) to the lower area of connection member 4 in the Z-direction. Specifically, the four lower holes 52 (small white circles) of connection member 4 are aligned with through-holes 53 (white circles) of connection fitting 37, and connection fitting 37 is secured to connection member 4 with fasteners 54 such as bolts. The positions of the four lower holes 52 (small white circles) in connection member 4 are pre-set such that movement cylinder 36 (cylinder body 36A and end member 36B) is oriented in the horizontal direction.

The two central holes 52 in the Z-direction of connection member 4 are shared by injection cylinder 32 in the high and low positions, whereby the machining cost of connection member 4 can be reduced. However, holes 52 for the high position and holes 52 for the low position may be provided exclusively.

Convex part 55 (large white circle) for positioning is provided on the surface of connection member 4 that faces connection fitting 37. In one example, convex part 55 has a dome shape. Convex part 55 is formed by joining a dome-shaped member to connection member 4 by using any joining means such as bolts or adhesives. Concave part (positioning part) 56 having a shape complementary to convex part 55 is provided on the surface of connection fitting 3 that faces connection member 4. By fitting convex part 55 into concave part 56, connection fitting 37 can be easily aligned with connection member 4. Although not shown in the drawings, convex part 55 may be provided on connection fitting 37 and concave part 56 may be provided on connection member 4.

In the present embodiment, two connection positions are provided to set the height of movement cylinder 36 at a high and low position. However, the number of height positions is not limited to two but may be three or more. That is, connection member 4 can be connected to connection fitting 37 of movement cylinder 36 at a plurality of connection positions such that movement cylinder 36 is oriented in the horizontal direction at each of the plurality of height positions. In other words, connection member 4 can be connected to connection fitting 37 at a plurality of connection positions by inserting fasteners 54 into holes 52 selected from the plurality of holes 52 of connection member 4 and the plurality of through-holes 53 of connection fitting 37.

### Use of a Plurality of Connection Members 4

A plurality of connection members 4 can be provided, and any one of connection members 4 can then be selectively mounted on fixed platen 22. Fig. 7 shows connection member 4 including holes 52 (small white circle) formed in different positions from connection member 4 shown in Figs. 6A and 6B. The connection position with connection fitting 37 is provided near the center of connection member 4 in the Z-direction.

As described above, a plurality of positioning plates 27 can be used to perform positioning sprue bushings M3 of different heights. Correspondingly, by selectively using connection members 4 shown in Figs. 6A and 6B and connection member 4 shown in Fig. 7, movement cylinder 36 can be kept horizontal for molds with sprue bushings M3 of various heights. When a plurality of connection members 4 is used, connection members 4 may have different sizes and shapes but the holes for inserting bolts 51 are preferably provided in the same positions.

That is, each of the plurality of connection members 4 is connectable to movement cylinder 36 at least at one connection position. By selecting any one of the plurality of connection members 4, connection members 4 can be connected to movement cylinder 36 at a plurality of connection positions such that movement cylinder 36 is oriented in the horizontal direction at each of a plurality of height positions. Although connection member 4 shown in Fig. 7 has only one connection position, holes 52 can be provided to allow a plurality of connection positions.

### Adjusting Method for Injection Molding Machine 1

Injection molding machine 1 described above is adjusted by the procedure next described. First, the height position of injection cylinder 32 is adjusted by lifting/lowering device 38 to match the height of the injection position of the injection material (sprue bushing M3) in fixed mold M1. Specifically, the height of injection cylinder 32 is adjusted so that the central axis C of injection cylinder 32 or injection nozzle 33 (see Figs. 1A and 1B) roughly matches the center of sprue bushing M3. Next, movement cylinder 36 is connected to fixed platen 22 via connection member 4 such that movement cylinder 36 is oriented in the horizontal direction at the adjusted height position of injection cylinder 32 or injection nozzle 33.

### Advantages of First Embodiment

The advantages of the present embodiment are next described. The injection position (sprue bushing) of the mold for an injection molding machine may differ depending on such factors as the injection material, the shape of a molded product, and the number of molded products. Generally, if the number of molded products is large, the injection position is set in the center of the mold. On the other hand, in the case of metal injection molding, the injection position is often set at the bottom of the mold to reduce air entrapment and the molten metal flows upward. However, for frame-shaped molded products such as steering wheels and TV monitor cases, the injection position may be set in the center of the mold even in the case of metal injection molding. Furthermore, even when the injection position is provided at the bottom of the mold, the optimal amount of deviation of the injection position from the center of the mold exists for each mold.

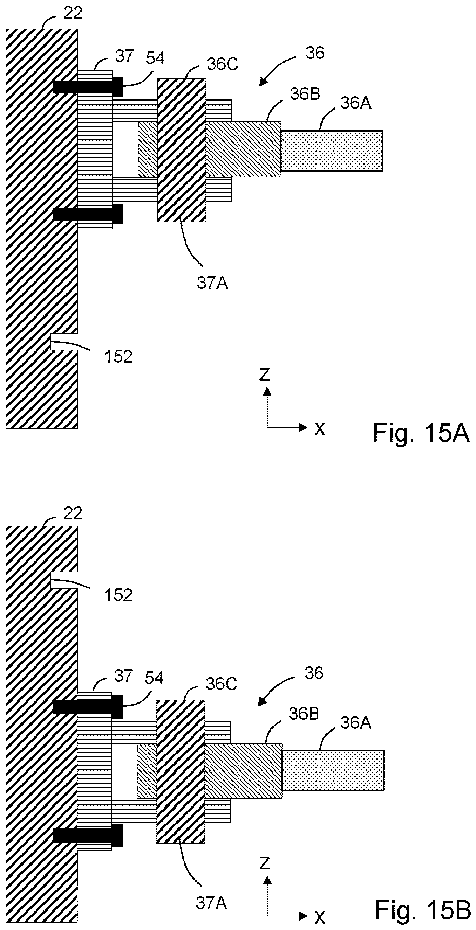

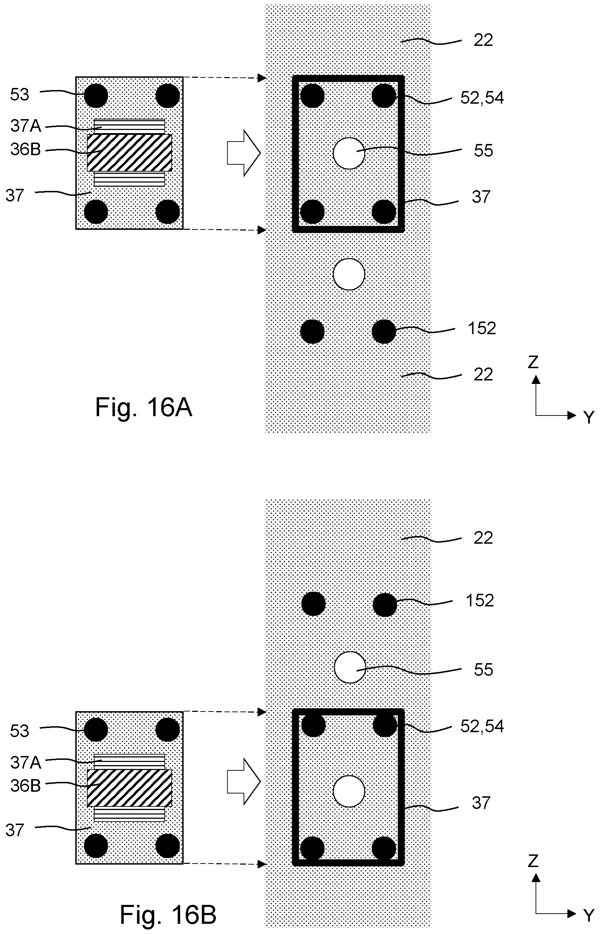

Figs. 15A and 15B show a side cross-sectional view of movement cylinder 36 and fixed platen 22 (corresponding to Figs. 5A and 5B) and Figs. 16A and 16B show a front view of connection fitting 37 and fixed platen 22 (corresponding to Figs. 6A and 6B) in a comparative example. Figs. 15A and 16A show a case in which injection cylinder 32 is in a high position, and Figs. 15B and 16B show a case in which injection cylinder 32 is in a low position. In this comparative example, connection member 4 is not provided and connection fitting 37 is secured directly to fixed platen 22. Connection fitting 37 in the comparative example has the same configuration as connection fitting 37 in the present embodiment.

Even in this comparative example, movement cylinder 36 can be secured to fixed platen 22 such that movement cylinder 36 is oriented in the horizontal direction for both the high and low positions of injection cylinder 32. To do so, however, holes 152 need to be provided in fixed platen 22 for securing connection fitting 37. If injection cylinder 32 is to be adjusted to three or more heights, even more holes 152 need to be provided in fixed platen 22, and this necessity may result in increased machining costs as well as the need for fixed platen 22 to be larger and thicker in order to ensure its strength.

Since movement cylinder 36 is secured to platen 22 via connection members 4 in injection molding machine 1 of the present embodiment, fixed platen 22 need be provided only with holes for bolts 51 to secure connection member 4. The number of holes has nothing to do with the number of adjustment steps of the height of movement cylinder 36. For example, the number of holes is the same whether the height is adjusted in two or three steps, and the structure of fixed platen 22 is therefore not significantly affected. By selectively using a plurality of connection members 4 as needed, movement cylinder 36 can be kept horizontal regardless of the height position of movement cylinder 36. Injection cylinder 32 can thus be moved more reliably in the horizontal direction.

### Second Embodiment

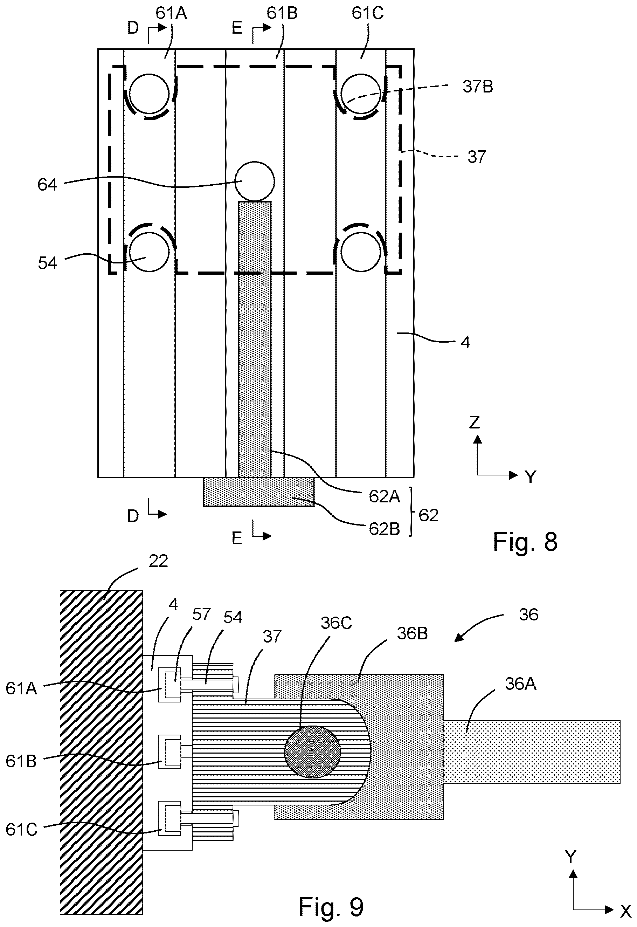

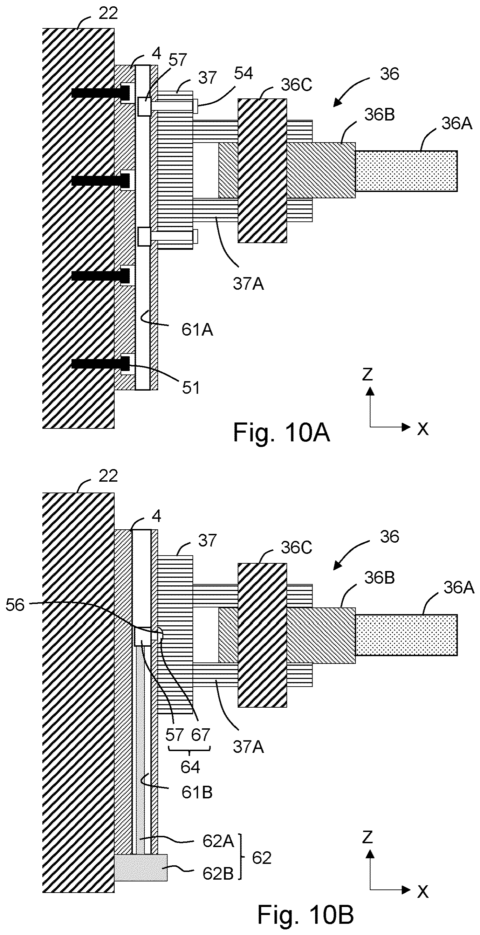

Injection molding machine 1 of the second embodiment of the present invention is next described with reference to Figs. 8 to 10. Configuration and effects omitted from the explanation are equivalent to those of the first embodiment. Fig. 8 is a front view of connection member 4 and connection fitting 37 (front view taken along line C-C in Fig. 2), connection fitting 37 being shown by dashed lines. Fig. 9 shows a plan view of the connection part between movement cylinder 36 and fixed platen 22 (enlarged view of area A in Fig. 2). Fig. 10A shows a cross-sectional view along line D-D in Fig. 8, and Fig. 10B shows a cross-sectional view along line E-E in Fig. 8.

As shown in Fig. 8, connection member 4 includes a plurality (three in the present embodiment) of guide grooves 61A to 61C that extend in parallel in the Z-direction. Guide grooves 61A to 61C extend over the entire length of connection member 4 in the Z-direction. As shown in Fig. 9, guide grooves 61A to 61C are open to the surface that faces connection fitting 37 of connection member 4. Guide grooves 61A to 61C are T-shaped grooves with narrower openings on the connection fitting 37 side.

Connection fitting 37 includes a plurality of (four in the present embodiment) notches 37B. Each notch 37B passes through connection fitting 37 and reaches any one of guide grooves 61A to 61C. Specifically, two notches 37B link to side guide groove 61A, and the other two notches 37B link to side guide groove 61C. Notches 37B are open in the Z-direction but alternatively may be open in the Y-direction. Through-holes may also be formed instead of notches 37B. Fasteners 54 are inserted into each of the plurality of notches 37B in connection fitting 37. As shown in Fig. 9, fasteners 54 are bolts having nuts 57 at one end. Nuts 57 are positioned inside guide grooves 61A and 61C. Gaps are provided between each nut 57 and the side walls of guide grooves 61A and 61C to allow each nut 57 to move in the Z-direction.

Positioning member 64 is provided in the central guide groove 61B of connection fitting 37. As shown in Fig. 10B, positioning member 64 comprises nut 57 that is housed in the central guide groove 61B and bolt 67 on the side of connection fitting 37 that screws into nut 57. The end of bolt 67 (the head of the bolt) has, for example, a dome shape as in the first embodiment. The head of bolt 67 protrudes from the surface of connection member 4 that faces connection fitting 37. Positioning member 64 has the function of positioning connection fitting 37.

### Positioning Method of Connection Fitting 37

Positioning connection fitting 37 in the Z-direction is performed by positioning member 64 and positioning rod 62. As shown in Figs. 8 and 10B, positioning rod 62 has a rod-shaped insertion part 62A that is inserted into central guide groove 61B and stopper part 62B that is fixed to the end of insertion part 62A. Insertion part 62A is removably inserted into central guide groove 61B. When stopper part 62B reaches the side wall of connection member 4, positioning rod 62 is provisionally secured. The length of insertion part 62A is set to an appropriate length for adjusting the height position of connection fitting 37.

In this state, positioning member 64 is moved in the Z-direction until nut 57 of positioning member 64 in central guide groove 61B comes against positioning rod 62 (in Fig. 8, positioning member 64 is moved downward). Bolt 67 is then tightened to secure positioning member 64 in central guide groove 61B. Since nut 57 has a generally square planar shape, the rotation of nut 57 is restricted by guide groove 61B. In other words, when bolt 67 is tightened, nut 57 strikes the side wall of guide groove 61B and thus is prevented from rotating, whereby positioning member 64 can be secured to connection member 4.

Next, as in the first embodiment, the head (convex part) of bolt 67 on the connection fitting 37 side fits into positioning part 56, which is a concave part, and connection fitting 37 is thus aligned with connection member 4 in the Z-direction. Fasteners 54 are then tightened to secure connection fitting 37 to connection member 4. Rotation of nuts 57 is regulated by guide grooves 61A and 61C. After securing connection fitting 37 to connection member 4, positioning rod 62 may remain attached to connection member 4 or may be removed from connection member 4.

Positioning rod 62 is inserted into central guide groove 61B but may also be inserted into any of guide grooves 61A to 61C. For example, positioning rod 62 may be inserted into either of guide grooves 61A and 61C on both sides, and nuts 57 inserted into guide grooves 61A and 61C may be used for positioning.

According to the present embodiment, connection fitting 37 can be secured to connection member 4 at a plurality of height positions by selectively using a plurality of positioning rods 62 having insertion parts 62A of different lengths. The position at which connection fitting 37 is connected to connection member 4 is determined by the length of insertion part 62A of positioning rod 62. The connection position of connection fitting 37 can thus be adjusted in a virtually stepless manner.

### Third Embodiment

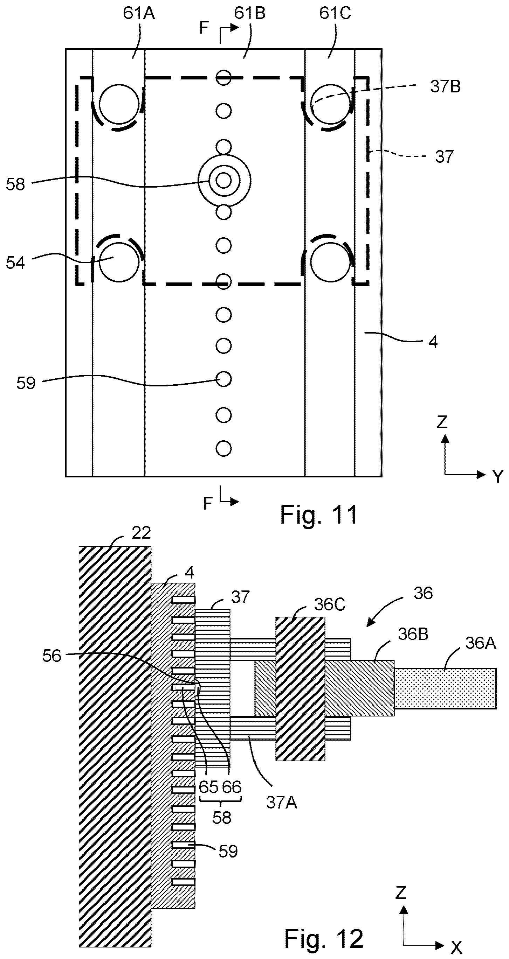

Injection molding machine 1 of the third embodiment of the present invention is next described with reference to Figs. 11 and 12. Configuration and effects omitted from this description are equivalent to those of the first and second embodiments. Fig. 11 is a front view of connection member 4 and connection fitting 37 (front view taken along line C-C in Fig. 2), and connection fitting 37 being shown by dashed lines. Fig. 12 shows a cross-sectional view taken along line F-F in Fig. 11.

In the present embodiment, guide grooves 61A and 61C are provided, and central guide groove 61B is omitted. Connection member 4 includes a plurality of holes 59 arranged parallel to the plurality of guide grooves 61A and 61C. Each of the plurality of holes 59 is open on the side that confronts connection fitting 37. Positioning member 58 is inserted into any one of the plurality of holes 59. Positioning member 58 has rod-shaped part 65 that is inserted into hole 59 and end part 66 that protrudes from the surface of connection member 4 that confronts connection fitting 37. End part 66 is, for example, dome-shaped similar to convex part 55 of the first embodiment. In other words, positioning member 58 has the function of positioning connection fitting 37 similar to convex part 55 of the first embodiment.

When positioning connection fitting 37, positioning member 58 is inserted into hole 59 at the appropriate height. The method of securing positioning member 58 in hole 59 is not limited. For example, threads may be provided on the sides of positioning member 58 and the sides of hole 59 and positioning member 58 may be secured by being screwed in. Alternatively, positioning member 58 may be secured by tight fitting. Then, as in the first embodiment, end 66 on the connection fitting 37 side of positioning member 58 fits into concave part 56 to align connection fitting 37 with connection member 4 in the Z-direction. Positioning members 54 are then tightened to secure connection fitting 37 to connection member 4.

In other words, in the present embodiment, the positioning of connection fitting 37 in the Z-direction is performed by selectively inserting positioning member 58 into any of the plurality of holes 59. Since holes 59 can be arranged at a relatively high density, connection fitting 37 can be fixed to connection member 4 at many height positions.

### Fourth Embodiment

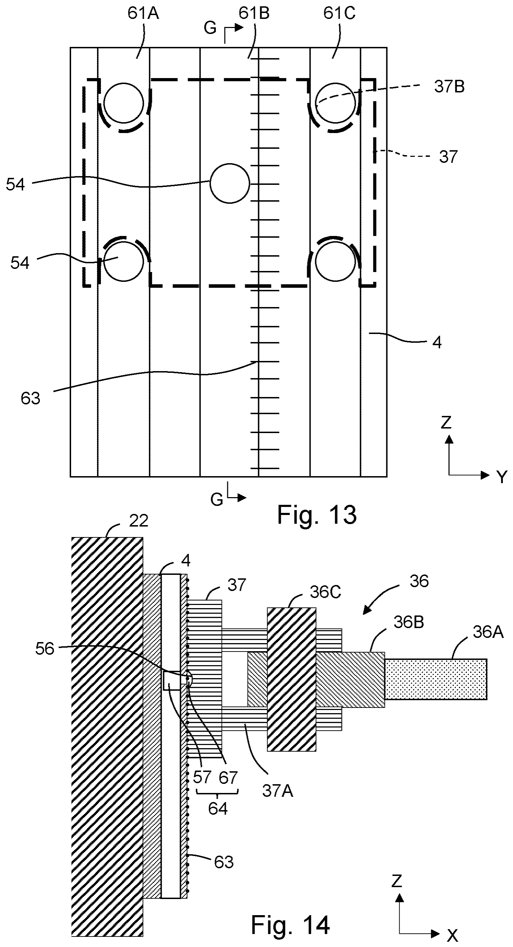

Injection molding machine 1 of the fourth embodiment of the present invention is next described with reference to Figs. 13 and 14. In the present embodiment, graduated scale 63 is used to position positioning member 64 instead of positioning rod 62 used in the second embodiment. Configuration and effects omitted from this explanation are equivalent to those of the first and second embodiments. Fig. 13 is a front view of connection member 4 and connection fitting 37 (front view taken along line C-C in Fig. 2), connection fitting 37 being shown by dashed lines. Fig. 14 shows a cross-sectional view along line G-G in Fig. 13.

The surface of connection member 4 that faces connection fitting 37 includes a plurality of guide grooves 61A to 61C, one of which comprises scale 63 for positioning connection fitting 37 in the Z-direction. In Fig. 14, scale 63 is shown as a series of projections for convenience, but it need not be realized by projections. Although scale 63 can be provided in guide grooves 61A to 61C, scale 63 is preferably provided on a part of the surface that faces connection fitting 37 other than guide grooves 61A to 61C. Although, no particular limits apply to the position of scale 63, scale 63 is preferably located in the vicinity of movement of positioning member 64. When setting positioning member 64, move positioning member 64 along connection member 4 in the Z-direction while referring to scale 63, and when positioning member 64 has moved to the appropriate position, tighten positioning member 64 to secure it to connection member 4. The subsequent process is the same as in the second embodiment. In the present embodiment, the position of connection fitting 37 on connection member 4 can be adjusted with virtually no steps.

### Modifying Method of Injection Molding Machine 1

Connection member 4 described above can be applied to a method of modifying injection molding machine 1. When modifying, movement cylinder 36 is preferably replaced with a new movement cylinder 36. The new moving cylinder 36 is preferably shorter than movement cylinder 36 before replacement by the thickness of connection member 4 (the length in the X-direction is shorter by the thickness of connection member 4). This configuration makes the total length of new movement cylinder 36 and connection member 4 together the same as the total length of movement cylinder 36 before replacement, a change that allows injection nozzle 33 to contact fixed mold M1 securely. New movement cylinder 36 is then connected to fixed platen 22 via connection member 4.

While some preferred embodiments of the invention have been shown and described in detail, it is to be understood that various changes and modifications are possible without departing from the intent or scope of the appended claims.

### Reference Number List

- 1: injection molding machine
- 4: connection member
- 22: fixed platen
- 32: injection cylinder
- 33: injection nozzle
- 36: movement cylinder
- 37: connection fitting
- 38: lifting/lowering device
- 52: hole
- 53: through-hole
- 54: fastener
- 57: nut
- 58: rod-shaped member
- 61A to 61C: guide grooves
- 62: positioning rod
- 63: scale
- 64: fastener
- M1: fixed mold

## Claims

1. An injection molding machine, comprising:
a fixed platen on which a fixed mold is mounted;
an injection cylinder that includes an injection nozzle;
a lifting/lowering device that vertically moves said injection cylinder so that said injection nozzle can assume a plurality of height positions;
a movement cylinder that moves said injection cylinder so that said injection nozzle can move toward and away from said fixed mold; and
a connection member that is mounted on said fixed platen and that is connected to said movement cylinder, wherein
said connection member is connectable to said movement cylinder at a plurality of connection positions such that said movement cylinder is oriented in the horizontal direction at each of said plurality of height positions.

2. The injection molding machine according to claim 1, wherein said movement cylinder comprises a connection fitting that is connected to said connection member, and said connection member is connectable to said connection fitting at said plurality of connection positions.

3. The injection molding machine according to claim 2, wherein
said connection member includes a plurality of holes,
said connection fitting includes a plurality of through-holes, and
said connection member is connected to said connection fitting at said plurality of connection positions by inserting fasteners into said plurality of through-holes in said connection fitting and selected holes among said plurality of holes in said connection member.

4. The injection molding machine according to claim 2, further comprising a plurality of fasteners that secure said connection fitting to said connection member, wherein
said connection member includes a plurality of guide grooves that extend in parallel in a vertical direction,
said connection fitting comprises a plurality of notches or through-holes each penetrating said connection fitting and extending any of said plurality of guide grooves,
said plurality of fasteners is inserted into said plurality of notches or through-holes in said connection fitting,
said plurality of fasteners comprises nuts at ends of said fasteners that are inserted into said guide grooves, and
rotation of said nuts is restricted by said guide grooves.

5. The injection molding machine according to claim 4, further comprising:
a positioning member that includes a nut that is inserted into any of said guide grooves, and a bolt that is coupled by treading to said nut and whose end part protrudes from said connection member; and
a positioning rod that can be removably inserted into any of said guide grooves, wherein
said connection fitting includes a positioning part that engages with said end part of said bolt to realize positioning in the vertical direction, and
said positioning rod comes against said nut to position said positioning member in the vertical direction.

6. The injection molding machine according to claim 4, further comprising:
a plurality of holes that is open to a surface of said connection member that faces said connection fitting and that is arranged in parallel to said guide grooves; and
a positioning member that includes a rod-shaped part that can be inserted into said holes, and an end part that protrudes from said connection member, wherein
said connection fitting includes a positioning part that engages with said end part to perform positioning in the vertical direction, and
the positioning of said positioning member in the vertical direction is performed by selectively inserting said rod-shaped part into any of said plurality of holes.

7. The injection molding machine according to claim 4, further comprising:
a positioning member that includes a nut inserted into any of said guide grooves, and a bolt that is coupled by threading to said nut and whose end protrudes from said connection member, wherein
said connection member includes a graduated scale on a surface that faces said connection fitting for positioning said positioning member in the vertical direction, and
said connection fitting includes a positioning part that engages with said end part of said bolt to perform positioning in the vertical direction.

8. An injection molding machine, comprising:
a fixed platen on which a fixed mold is mounted;
an injection cylinder that includes an injection nozzle;
a lifting/lowering device that vertically moves said injection cylinder so that said injection nozzle can assume a plurality of height positions;
a movement cylinder that moves said injection cylinder so that said injection nozzle can move toward and away from said fixed mold; and
a plurality of connection members that can be mounted on said fixed platen and that can connect to said movement cylinder, wherein
each of said plurality of connection members can connect with said movement cylinder at least one connection position, and
by selecting any of said connection members, each of said plurality of connection members can connect to said movement cylinder at a plurality of said connection positions such that said movement cylinder is oriented in the horizontal direction at each of said plurality of height positions.

9. The injection molding machine according to any one of claims 1 to 8, further comprising:
a plurality of positioning plates, each of which is capable of being removably provided on said fixed platen for positioning one of a plurality of sprue bushings based on the height of said sprue bushing of said fixed mold.

10. The injection molding machine according to any one of claims 1 to 9, wherein said injection molding machine is a metal injection molding machine.

11. A connection member, comprising:
a fixed platen on which a fixed mold is mounted;
an injection cylinder that includes an injection nozzle;
a lifting/lowering device that vertically moves said injection cylinder so that said injection nozzle can assume a plurality of height positions; and
a movement cylinder that moves said injection cylinder so that said injection nozzle can move toward and away from said fixed mold, wherein
said connection member is fixed to said fixed platen,
said connection member can connect to said movement cylinder at a plurality of said connection positions such that said movement cylinder is oriented in the horizontal direction at each of said plurality of height positions.

12. A method of adjusting an injection molding machine, said injection molding machine comprising:
a fixed platen on which a fixed mold is mounted;
an injection cylinder that includes an injection nozzle;
a lifting/lowering device that vertically moves said injection cylinder so that said injection nozzle can assume a plurality of height positions; and
a movement cylinder that moves said injection cylinder so that said injection nozzle can move toward and away from said fixed mold, said method comprising steps of:
(A) adjusting the position of said injection cylinder by means of said lifting/lowering device to align with a height of an injection position of an injection material into said fixed mold; and
(B) connecting said movement cylinder to said fixed platen via a connection member such that said movement cylinder is oriented in the horizontal direction,
wherein said connection member can connect to said movement cylinder at a plurality of connection positions such that said injection cylinder is oriented in the horizontal direction at each of said plurality of height positions.

13. A method of modifying an injection molding machine, said injection molding machine comprising:
a fixed platen on which a fixed mold is mounted;
an injection cylinder that includes an injection nozzle;
a lifting/lowering device that vertically moves said injection cylinder so that said injection nozzle can assume a plurality of height positions; and
a movement cylinder that moves said injection cylinder so that said injection nozzle can move toward and away from said fixed mold, said method comprising a step of:
(A) replacing said movement cylinder with a new movement cylinder and connecting said new movement cylinder to said fixed platen via a connection member,
wherein said connection member can connect to said new movement cylinder at a plurality of connection positions such that said new movement cylinder is oriented in the horizontal direction at each of said plurality of height positions, and said new movement cylinder is shorter than said movement cylinder before replacement by the thickness of said connection member.
